(19) Europäisches Patentamt
European Patent Office
Office européen des brevets

(11) Veröffentlichungsnummer: **0 013 546**
**B1**

(12) # EUROPÄISCHE PATENTSCHRIFT

(45) Veröffentlichungstag der Patentschrift: **26.05.82**

(51) Int. Cl.³: **B 27 K 3/15,** C 08 F 220/00

(21) Anmeldenummer: **79890062.7**

(22) Anmeldetag: **12.12.79**

(54) **Verfahren zur Herstellung von Holz-Kunststoffkombinationen.**

(30) Priorität: **13.12.78 AT 8873/78**

(43) Veröffentlichungstag der Anmeldung: **23.07.80 Patentblatt 80/15**

(45) Bekanntmachung des Hinweises auf die Patenterteilung: **26.05.82 Patentblatt 82/21**

(84) Benannte Vertragsstaaten: **CH DE FR**

(56) Entgegenhaltungen:

**BE-A-799 494**
**DE-A-1 720 747**
**DE-A-1 954 367**
**DE-A-2 007 591**
**DE-A-2 109 686**
**DE-A-2 150 235**
**DE-A-2 421 446**
**FR-A-1 593 137**
**FR-A-2 099 974**

(73) Patentinhaber: **Österreichisches Forschungszentrum Seibersdorf Gesellschaft m.b.H., Lenaugasse 10, A-1082 Wien (AT)**

(72) Erfinder: **Schaudy, Rudolf, Dr., Schöne Felder-weg 13, A-2500 Baden (AT)**
Erfinder: **Wendrinsky, Josef, Dipl.-Ing, Brückengasse 10-12/II/29, A-1060 Wien (AT)**
Erfinder: **Proksch, Emil, Prof. Dipl.-Ing. Dr., Laaerbergstr. 38, A-1100 Wien (AT)**
Erfinder: **Slais, Erich, Kunngasse 7/26, A-1100 Wien (AT)**

EP 0 013 546 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zur Herstellung von Holz-Kunststoffkombinationen

Die Erfindung betrifft ein Verfahren zur Herstellung von neuen Holz-Kunststoffkombinationen.

Alle bisher bekannten Imprägnierverfahren von Holz haben das Ziel, eine oder mehrere Eigenschaften dieses Werkstoffes zu verbessern. Diese auf den Verwendungszweck ausgerichteten Verbesserungen beziehen sich auf Härte, mechanische Festigkeit, Dimensionsstabilität, Feuchtigkeits- bzw. Wasserbeständigkeit, Witterungsbeständigkeit und dergleichen. Insbesondere das aus zahlreichen Patentschriften, z.B. aus den US-A-3 077 417 bis 3 077 420, 3 765 934 oder 3 787 244, bekannte Polymerholz, bei welchem durch Tränken mit Monomeren oder Kunstharzlösungen und darauf folgende thermisch-chemische oder strahlenchemische Härtung ein neuer Werkstoff entsteht, zeichnen sich durch wesentliche Verbesserungen vieler Eigenschaften, wie Härte, Druck- und Abriebfestigkeit, verminderte Quellung, Dimensionsstabilität und dergleichen aus. Dies gilt besonders, wenn weiche bis mässig harte, aber gut imprägnierbare Hölzer verwendet werden.

Werden besonders hochwertige Holz-Kunststoffkombinationen angestrebt, so müssen Imprägniergemische verwendet werden, wie sie z.B. aus der AT-B-300 527 bekannt geworden sind, die nicht nur die Poren und Hohlräume der Holzmatrix füllen, sondern auch in die Zellwände eindringen und so eine besonders innige Verbindung zwischen Holz und Kunststoff herstellen.

Eine weitere Verbesserung kann erreicht werden, wenn die Kunststoffkomponente gezielt auf die Holzbausteine (Zellulose, Hemizelluose, Lignin) aufgepfropft, d.h. an diese chemisch gebunden wird. Dies kann beispielsweise durch Imprägnieren mit aliphatischen oder aromatischen Isocyanaten erfolgen. Dabei wird das Holz nach tagelangem Tränken durch mehrstündiges Erwärmen oder wochenlanges Lagern gehärtet, wobei die Isocyanate mit den Holzsubstanzen zur Reaktion gebracht werden.

Gemäss der BE-A-799 494 bzw. DE-C-2 421 446 wird Holz zuerst mit Dialkoholen mehrere Tage imprägniert, sodann werden Isocyanatverbindungen in Dampfform bei hoher Temperatur und niedrigem Druck mehrere Stunden einwirken gelassen. Nach einer Lagerzeit von einer Woche entsteht ein Produkt mit guter Dimensionsstabilität.

Schwerpunkt der DE-A-2 150 235 ist eine hauptsächlich die Oberflächenschicht betreffende Imprägnierung von zellulosehaltigen Materialien mit Polyurethanharzen, wobei als Isocyanate Di-, Tri- oder Polyisocyanate, also Isocyanate mit mehr als einer Isocyanatgruppe im Molekül, eingesetzt werden, so dass es zusammen mit den mehrere aktive Wasserstoffatome enthaltenden Verbindungen zur dort ausdrücklich angestrebten Ausbildung von Polyurethan-Ketten kommt.

In der DE-A-2 109 686 ist die Herstellung oder Veredelung lignozellulosehaltiger Werkstoffe beschrieben und in diesem Rahmen auch eine Imprägnierung von Vollholz mit Hilfe von aromatischen Diisocyanaten.

Schliesslich ist in der DE-A-1 954 367 beschrieben, Holz mit einer Lösung eines durch Formel charakterisierten, sehr speziellen organischen Polyisocyanates zu tränken, dessen Herstellung äusserst aufwendig ist und das, obwohl zu seiner Herstellung ungesättigte Fettsäuren eingesetzt werden, selbst keine Doppelbindung aufweist.

Gemäss beiden Druckschriften ist eine radikalische Polymerisation mittels Strahlung oder auf thermisch-katalytischem Wege nicht vorgesehen.

Ziel der vorliegenden Erfindung ist es, ein Verfahren zur Herstellung besonders dimensionsstabiler und mechanisch fester Holz-Kunststoffkombinationen zu schaffen, das rasch und einfach durchgeführt werden kann und bei dem eine hervorragende Verankerung des Polymers im Holz gewährleistet ist.

Es wurde ein neues Verfahren entwickelt, welches es ermöglicht, die Vorteile einer Polymerisation im Holzkörper selbst und jene einer Verknüpfung der Moleküle der Holzkomponenten, bzw. von deren reaktiven Gruppen mit den Isocyanatgruppen organischer Isocyanate miteinander zu verbinden.

Das erfindungsgemässe Verfahren zur Herstellung von neuen Holz-Kunststoffkombinationen, wobei trockenes Holz mit mindestens einem organischen Isocyanat in Gegenwart von ungesättigten Verbindungen, sowie gegebenenfalls Lösungsmitteln, Initiatoren und/oder Beschleunigern imprägniert, die überschüssige Flüssigkeit abgezogen und die im Holz zurückbleibende Verbindung unter Einwirkung von ionisierender Strahlung oder thermisch-katalytisch polymerisiert wird, ist dadurch gekennzeichnet, dass das Holz mit einem Gemisch (a + b), worin die Komponente a in einer Menge von 2 - 60 Gew.-% vorliegt, und in welchem die Komponente a aus

a.1 mindestens einem organischen Isocyanat, das mindestens eine radikalisch polymerisierbare Gruppe oder Bindung und nur eine Isocyanatgruppe im Molekül aufweist, wie etwa 2-Isocyanatoäthylacrylat, N-(6--Isocyanatohexyl)-allylcarbamat, N-(6-Isocyanato-2-tolyl)-(2-acryloyloxyäthyl)-carbamat, N-(6-Isocyanato-n-hexyl)-(2-methacryloyloxypropyl)-carbamat und/oder N-(6-Isocyanato-4-tolyl)-N'-(2-acryloyloxyäthyl)-harnstoff,

und/oder aus

a.2 dem Reaktionsprodukt von

a.2.1. mindestens einem zwei Isocyanatgruppen im Molekül aufweisenden organischen Isocyanat, wie etwa Diisocyanatotoluol, 1,6-Diisocyanatohexan, Isophorondiisocyanat

und/oder 1,6-Diisocyanato-2,2,4-trimethylhexan, mit

a.2.2. mindestens einer α,β- oder β,γ-olefinisch ungesättigten Verbindung mit nur einem aktiven Wasserstoffatom im Molekül, wie etwa 2-Hydroxypropylacrylat, 4-Hydroxybutylacrylat, 2-Aminoäthylmethacrylat, Allylalkohol, Acrylsäure, Maleinsäuremonomethylester, 2-Hydroxyäthylacrylat, Mesaconsäuremonoäthylester,

und die Komponente b aus mindestens einem radikalisch polymerisierbaren α,β- oder β,γ-olefinisch ungesättigten Reaktivverdünner, wie etwa Acrylnitril, Methyl(meth)acrylat und/oder Äthylacrylat, besteht, imprägniert wird, wonach die Polymerisation vorgenommen wird.

Durch die erfindungsgemässe Vorgangsweise wird erreicht, dass eine Verankerung des Polymerisates an der Holzsubstanz über die Isocyanatgruppe des organischen Isocyanates stattfindet, so dass dadurch eine weitgehende Modifikation der Eigenschaften erzielbar ist. Gleichzeitig erfolgt eine Polymerisation innerhalb des Holzkörpers, und auch über die Wahl der Verbindungen b und die Art und Intensität der Strahlung lassen sich weitere Modifikationen erreichen.

Es wird also erfindungsgemäss das Holz mit einem Gemisch aus den Komponenten «a plus b» imprägniert, wobei die Komponente

a: 1.) ein organisches Isocyanat mit einer Isocyanatgruppe und mindestens einer Doppelbindung im Molekül ist oder

a. 2.) ein Umsetzungsprodukt von

a.2.1 ) mindestens eines zwei Isocyanatgruppen im Molekül aufweisenden Isocyanates mit

a.2.2 ) mindestens einer ein aktives Wasserstoffatom (z.B. OH, $NH_2$) und mindestens eine Doppelbindung im Molekül aufweisenden Verbindung

b: ein Verdünner für die Komponente a ist, welcher mit dieser Komponente a zu reagieren, insbesondere zu polymerisieren imstande sein muss und daher eine Verbindung darstellt, welche mindestens eine polymerisierbare Doppelbindung aufweist.

Beim erfindungsgemässen Verfahren kommt es ganz unterschiedlich zum Verfahren der obenerwähnten DE-A-2 150 235 nicht zur Ausbildung von Polyurethanen, das Hauptgewicht liegt hier auf der radikalischen Polymerisation (und der dabei stattfindenden Ausbildung besonders stabiler Grossmoleküle) in Verbindung mit der durch die Isocyanatgruppen bewirkten Pfropfreaktionen.

Nur zur Erläuterung und ohne jede einschränkende Wirkung und ohne Anspruch auf Richtigkeit und Vollkommenheit soll im folgenden nur ganz schematisch der Vorgang nach der Tränkung beim erfindungsgemässen Verfahren beispielhaft angeführt werden:

Zellulose - [OH + O]=C=N-$R_1$-CH=CH$_2$
(Holz) (a)
CH$_2$=CH-$R_2$
(b)

[ ] = Addition --- = Polymerisation

Keineswegs einschränkende Beispiele für radikalisch polymerisierbare Isocyanate sind:
2-Isocyanatoäthylacrylat,
N-(6-Isocyanatohexyl)-allylcarbamat,
N-(6-Isocyanato-2-tolyl)-(2-acryloyloxyäthyl)-carbamat,
N-(6-Isocyanato-n-hexyl)-(2-methacryloyloxypropyl)-carbamat und/oder
N-(6-Isocyanato-4-tolyl)-N'-(2-acryloyloxyäthyl)-harnstoff.

Ebenfalls nicht einschränkende Beispiele für zwei Isocyanatgruppen aufweisende Isocyanate sind:
Diisocyanatotoluol, 1,6-Diisocyanatohexan, Isophorondiisocyanat und/oder 1,6-Diisocyanato-2,2,4-trimethylhexan.

Nicht einschränkende Beispiele für α,β- oder β,γ-olefinisch ungesättigte Verbindungen mit einem aktiven Wasserstoffatom sind:
2-Hydroxypropylacrylat, 4-Hydroxybutylacrylat, 2-Aminoäthylmethacrylat, Allylalkohol, Acrylsäure, Maleinsäuremonomethylester, 2-Hydroxyäthylacrylat und/oder Mesaconsäuremonoäthylester.

Nicht einschränkende Beispiele für den Reaktivverdünner, also die Komponente b, sind:
Acrylnitril, Methylmethacrylat, Äthylacrylat.

Besonders vorteilhafte Eigenschaften der erhaltenen Holz-Kunststoffkombinationen ergeben sich dann, wenn ein Umsetzungsprodukt a.2 eingesetzt wird, das pro einem Äquivalent aktiven Wasserstoffs in der olefinisch ungesättigten Verbindung a.2.2 0,1 - 10 Äquivalente, vorzugsweise 0,6 - 3 Äquivalente, des zwei Isocyanatgruppen aufweisenden organischen Isocyanates a.2.1 enthält.

Eine bevorzugte Ausführungsform des erfindungsgemässen Verfahrens besteht darin, dass als olefinisch ungesättigte Verbindung mit einem aktiven Wasserstoffatom a.2.2 Hydroxyalkyl-(meth)acrylat eingesetzt wird.

Wird bei Polymerisation mit ionisierenden Strahlen gleichzeitg eine thermische Behandlung bzw. Konditionierung vorgesehen, so kann diese entweder vor, während oder nach der Bestrahlung erfolgen, wodurch vor allem eine noch bessere Verankerung erreicht werden kann.

Bei der Imprägnierung selbst kann so vorgegangen werden, dass das Holz bei Unterdruck behandelt wird, es ist jedoch auch möglich, eine Überdruck-Imprägnierung durchzuführen.

In jedem Fall erfolgt die Imprägnierung schnell und vollständig. Sie ist also nicht nur auf die Oberflächenzone beschränkt. Das Ergebnis sind Holz-Kunststoffkombinationen mit besonders hoher mechanischer Festigkeit (Zähigkeit) und hervorragender Dimensionsstabilität.

Im folgenden wird die Erfindung anhand von Beispielen näher erläutert.

Beispiel 1

Ahornholzstücke der Dimension 30 × 40 × 80 mm wurden nach dem Entfernen der Luft aus den Poren und Hohlräumen des Holzes durch Evakuieren in einem Vakuum-Druck-Kessel mit einem Gemisch bestehend aus 80 Gew.-% Methylmethacrylat und 20 Gew.-% eines Reaktionsproduktes aus äquimolaren Teilen Hydroxyäthylacrylat und Diisocyanatotoluol imprägniert und danach durch Bestrahlen mit Gammastrahlen, Dosis 30 kGy, gehärtet.

Beispiel 2

Ahornholzstücke der Dimension 30 × 40 × 80 mm wurden, wie in Beispiel 1 beschrieben, mit einem Gemisch, bestehend aus 80 Gew.-% Methylmethacrylat und 20 Gew.-% 2-Isocyanatoäthylacrylat, imprägniert und danach mit Gammastrahlen, Dosis 30 kGy, gehärtet.

Beispiel 3

Ahornholzstücke der Dimension 30 × 40 × 80 mm wurden, wie in Beispiel 1 beschrieben, mit einem Gemisch, bestehend aus 80 Gew.-% Äthylacrylat, 3 Gew.-% Acrylnitril und 17 Gew.-% N--(6-Isocyanatohexyl)-allylcarbamat, imprägniert und danach mit Gammastrahlen, Dosis 40 kGy, gehärtet.

Beispiel 4

Ahornholzstücke der Dimension 30 × 40 × 80 mm wurden, wie in Beispiel 1 beschrieben, mit einem Gemisch, bestehend aus 85 Gew.-% Methylmethacrylat, 14,5 Gew.-% eines Reaktionsproduktes aus äquimolaren Teilen Hydroxyäthylacrylat und Diisocyanatotoluol, 0,4 Gew.-% Methylpiperidin sowie 0,1 Gew.-% Benzoylperoxid imprägniert und danach 1 Stunde bei 80°C im Trockenschrank gehärtet.

Beispiel 5

Ahornholzstücke der Dimension 30 × 40 × 80 mm wurden, wie in Beispiel 1 beschrieben, mit einem Gemisch, bestehend aus 70 Gew.-% Methylmethacrylat, 5 Gew.-% Acrylnitril und 25 Gew.-% eines Reaktionsproduktes aus 20 Teilen Hexamethylen-1,6-diisocyanat und 118 Teilen eines mit 21 Teilen Glycidylmethacrylat modifizierten Copolymers aus Butylacrylat und Hydroxyäthylacrylat mit einer Hydroxylzahl von 155, imprägniert und danach mit Gammastrahlen, Dosis 35 kGy, bei gleichzeitiger Erwärmung auf 60°C gehärtet.

An den Holzstücken der Beispiele 1 bis 5 bzw. daraus angefertigten Probekörpern wurden Monomeraufnahme, Härte (DIN 53456), Schlagbiegefestigkeit (DIN 53453) und Quellung in Wasser (nach DIN 52184) bestimmt. In der Tabelle sind die Ergebnisse denen herkömmlicher Polymerhölzer, die analog Beispiel 1 hergestellt wurden, und des Ausgangsmaterials gegenübergestellt. Es ist bei den erfindungsgemäss hergestellten Proben die Schlagbiegefestigkeit stark erhöht und die Quellung geringer bei etwa gleicher Härte im Vergleich zu mit 100% Methylmethacrylat oder auch mit einem Gemisch aus 30 Gew.-% Methylmethacrylat und 70 Gew.-% Acrylnitril imprägnierten und analog strahlungsgehärteten Polymerhölzern. Das ästhetische Aussehen ist bei allen untersuchten Polymerholzproben sehr ähnlich.

Tabelle

| Material | Monomer-aufnahme (%) | Härte (N/mm²) | Schlagbiege-festigkeit (kNm/m²) | Gewichts-quellung (%) | Volumen-quellung (%) |
|---|---|---|---|---|---|
| Ahorn natur | — | 36,3 | 14,7 | 72,3 | 13,8 |
| Ahorn.Polymerholz imprägniert mit | | | | | |
| 100% Methylmethacrylat | 67,3 | 176,6 | 18,6 | 21,1 | 10,6 |
| 30% Methylmethacrylat 70% Acrylnitril | 68,0 | 196,6 | 17,7 | 7,5 | 5,7 |
| Beispiel 1 | 66,5 | 186,4 | 32,4 | 5,4 | 4,0 |
| Beispiel 2 | 67,0 | 186,4 | 29,4 | 6,0 | 4,4 |
| Beispiel 3 | 65,8 | 196,2 | 27,5 | 5,8 | 4,2 |
| Beispiel 4 | 68,1 | 206,0 | 29,4 | 5,5 | 4,1 |
| Beispiel 5 | 62,3 | 210,9 | 26,5 | 4,8 | 3,8 |

**Patentansprüche**

1. Verfahren zur Herstellung von neuen Holz-Kunststoffkombinationen, wobei trockenes Holz mit mindestens einem organischen Isocyanat in Gegenwart von ungesättigten Verbindungen, sowie gegebenenfalls Lösungsmitteln, Initiatoren und/oder Beschleunigern imprägniert, die überschüssige Flüssigkeit abgezogen und die im Holz zurückbleibende Verbindung unter Einwirkung von ionisierender Strahlung oder thermisch-katalytisch polymerisiert wird, dadurch gekennzeichnet, dass das Holz mit einem Gemisch (a + b), worin die Komponente a in einer Menge von 2 - 60 Gew.-% vorliegt, und in welchem die Komponente a aus

a.1 mindestens einem organischen Isocyanat, das mindestens eine radikalisch polymerisierbare Gruppe oder Bindung und nur eine Isocyanatgruppe im Molekül aufweist, wie etwa 2-Isocyanatoäthylacrylat, N-(6--Isocyanatohexyl)-allylcarbamat, N-(6-Isocyanato-2-tolyl)-(2-acryloyloxyäthyl)-carbamat, N-(6-Isocyanato-n-hexyl)-(2-methacryloyloxypropyl)-carbamat und/oder N-(6-Isocyanato-4-tolyl)-N'-(2-acryloyloxyäthyl)-harnstoff,

und/oder aus

a.2 dem Reaktionsprodukt von

a.2.1. mindestens einem zwei Isocyanatgruppen im Molekül aufweisenden organischen Isocyanat, wie etwa Diisocyanatotoluol, 1,6-Diisocyanatohexan, Isophorondiisocyanat und/oder 1,6-Diisocyanato-2,2,4-trimethylhexan, mit

a.2.2. mindestens einer α,β- oder β,γ-olefinisch ungesättigten Verbindung mit nur einem aktiven Wasserstoffatom im Molekül, wie etwa 2-Hydroxypropylacrylat, 4-Hydroxybutylacrylat, 2-Aminoäthylmethacrylat, Allylalkohol, Acrylsäure, Maleinsäuremonomethylester, 2-Hydroxyäthylacrylat, Mesaconsäuremonoäthylester,

und die Komponente b aus mindestens einem radikalisch polymerisierbaren α,β- oder β,γ-olefinisch ungesättigten Reaktivverdünner, wie etwa Acrylnitril, Methyl(meth)acrylat und/oder Äthylacrylat, besteht, imprägniert wird, wonach die Polymerisation vorgenommen wird.

2. Verfahren nach Anspruch 1, dadurch gekennzeichnet, dass ein Umsetzungsprodukt a.2 eingesetzt wird, das pro einem Äquivalent aktiven Wasserstoffs in der olefinisch ungesättigten Verbindung a.2.2 0,1 - 10 Äquivalente, vorzugsweise 0,6 - 3 Äquivalente, des zwei Isocyanatgruppen aufweisenden organischen Isocyanates a.2.1 enthält.

3. Verfahren nach einem der Ansprüche 1 oder 2, dadurch gekennzeichnet, dass als olefinisch ungesättigte Verbindung mit einem aktiven Wasserstoffatom a.2.2 Hydroxyalkyl(meth)acrylat eingesetzt wird.

4. Verfahren nach einem der Ansprüche 1 bis 3, dadurch gekennzeichnet, dass vor, während oder nach der Polymerisation mit ionisierender Strahlung eine thermische Behandlung bzw. Konditionierung vorgenommen wird.

**Claims**

1. A process for the production of new wood-plastic composites, in which dry wood is impregnated with at least one organic isocyanate in the presence of unsaturated compounds and — if required — solvents, initiators and/or accelerators, the surplus liquid is removed and the compound remaining in the wood is polymerized through exposure to ionizing radiaton or by thermo-catalytic means, characterized by the fact that the wood is impregnated with a mixture (a + b), with component a accounting for 2 - 60 wt-%, in which component a consists of

a.1 at least one organic isocyanate, which has at least one group or bond that lends itself to radical polymerization, and no more than one isocyanate group in the molecule, such as 2-isocyanatoethylacrylate, N-(6--isocyanatohexyl)-allyl carbamate, N-(6-isocyanato-2-tolyl)-(2-acryloyloxyethyl)-carbamate, N-(6-isocyanato-n-hexyl)-(2-methacryloyloxypropyl)-carbamate and/or N-(6--isocyanato-4-tolyl)-N'-(2-acryloyloxyethyl)--carbamide,

and/or

a.2 the reaction product of

a.2.1 at least one organic isocyanate with two isocyanate groups in the molecule, such as diisocyanatotoluene, 1,6-diisocyanatohexane, isophorone diisocyanate and/or 1,6-diisocyanato-2,2,4-trimethylhexane, with

a.2.2 at least one α,β- or β,γ-olefinic unsaturated compound with no more than one active hydrogen atom in the molecule, such as 2-hydroxypropylacrylate, 4-hydroxybutylacrylate, 2-aminoethylmethacrylate, allyl alcohol, acrylic acid, monoethyl maleate, 2-hydroxyethylacrylate, monoethyl measaconate,

and component b of at least one α,β- or β,γ-olefinic unsaturated reactive diluent that lends itself to radical polymerization, such as acrylonitrile, methyl (meth)-acrylate and/or ethyl acrylate, and subsequently polymerized.

2. A process as claimed in claim 1, characterized by the fact that a reaction product as under a.2 is used, containing 0.1 - 10, preferably 0.6 - 3, equivalents of the organic isocyanate with two isocyanate groups as under a.2.1 per active hydrogen equivalent in the olefinic unsaturated compound as under a.2.2.

3. A process as claimed in claim 1 or 2, characterized by the fact that hydroxyalkyl(meth)-acrylate is used as the olefinic unsaturated compound with one active hydrogen atom as under a.2.2.

4. A process as claimed in claim 1 or 3, characterized by the fact that thermal treatment

or conditioning takes place before, during or after polymerization by means of ionizing radiation.

**Revendications**

1. Procédé d'élaboration de nouvelles combinaisons bois-matière plastique selon lequel le bois sec est imprégné d'au moins un isocyanate organique en présence de composés insaturés ainsi que, le cas échéant, de solvants, d'excitants et/ou d'accélérateurs après quoi le liquide en excédent est éliminé et le composé restant dans le bois est polymérisé en présence de radiations ionisantes ou par voie thermocatalytique, caractérisé en ce que le bois est imprégné d'un mélange (a + b) dans lequel le constituant a se trouve dans la proportion de 2 - 60% en poids et dans lequel le constituant a consiste en

a.1 au moins un isocyanate organique dont la molécule contient au moins un groupe ou un composé à polymérisation radicalaire et présente un seul groupe isocyanate tel que: acrylate de 2-isocyanatoéthyle, N-(6--isocyanato-héxyle)-allyle-urée, N-(6-isocyanato-2-tolyle)-(2-acryloyle-oxyéthyle)--carbamate, N-(6-isocyanato-n-héxyle)-(2--méthacryloyle-oxypropyle)-carbamate et/ou N-(6-isocyanato-4-tolyle)-N'-(2-acryloyle-oxyéthyle)-urée,
et/ou

a.2 le produit de réaction de

a.2.1. au moins un isocyanate organique dont la molécule contient deux groupes isocyanate, tel que: toluylène-diisocyanate, diisocyanato-1,6 hexane, isophorone-diisocyanate et/ou diisocyanato-1,6 triméthyle-2,2,4 hexane, avec

a.2.2. au moins un composé à insaturation oléfinique α,β ou β,γ, dont la molécule contient un seul atome d'hydrogène actif, p. ex. acrylate de 2-hydroxypropyle, acrylate de 4-hydroxybutyle, méthacrylate de 2-aminoéthyle, alcool allylique, acide acrylique, maléate de monométhyle, acrylate de 2-hydroxyéthyle, mésaconate de monoéthyle,

et le constituant b consiste en
au moins un diluant réactif à insaturation oléfinique α,β ou β,γ, à polymérisation radicalaire, tel que: acrylonitrile, acrylate de méthyle (méthacrylate de méthyle) et/ou acrylate d'éthyle, après quoi on procède à la polymérisation.

2. Procédé suivant la revendication 1, caractérisé en ce que on utilise un produit de réaction a.2 contenant 0,1 - 10 équivalents — de préférence 0,6 — 3 équivalents de l'isocyanate organique présentant deux groupes isocyanate a.2.1. pour un équivalent d'hydrogène actif dans le composé à insaturation oléfinique a.2.2.

3. Procédé suivant la revendication 1 ou 2 caractérisé en ce que on utilise comme composé à insaturation oléfinique avec un atome d' hydrogène actif a.2.2. l'acrylate d'hydroxyalkyle (méthacrylate d'hydroxyalkyle).

4. Procédé suivant la revendication 1 à 3, caractérisé en ce que l'on fait subir au bois un traitement ou conditionnement thermique avant, pendant ou après la polymérisation, en présence de radiations ionisantes.